# EUROPEAN PATENT SPECIFICATION

(11) **EP 3 186 342 B1**
(45) Date of publication and mention of the grant of the patent: **24.07.2019**
(21) Application number: 15835166.8
(22) Date of filing: 24.08.2015
(51) Int. Cl.: C10J 3/18

(54) **MSW PLASMA GASIFICATION REACTOR**
MSW-PLASMAVERGASUNGSREAKTOR
RÉACTEUR DE GAZÉIFICATION DE DÉCHETS SOLIDES MUNICIPAUX (DSM) À PLASMA

(30) Priority: 28.08.2014 IL 23437014
(43) Date of publication of application: 05.07.2017
(73) Proprietor: (MR) Mazal Resources B.v., 1019 DT Amsterdam (NL)
(72) Inventor: STERN, Moshe, 4642413 Herzliya (IL)
(74) Representative: Russell, Tim
(86) International application number: PCT/IL2015/050845
(87) International publication number: WO 2016/030881

(56) References cited:
- WO-A2-2007/131239
- SE-B- 429 138
- US-A1- 2003 024 806
- US-A1- 2010 258 429
- US-A1- 2011 062 013
- US-B2- 7 832 344

## Description

### Field of the invention

The invention generally relates to plasma gasification reactors with features that can facilitate solid waste gasification process for producing synthesis gas. Specifically the invention relates to configurations of the gasifier shaft and plasma torch with steam as the gasifing agent medium.

### Background of the invention

Solid waste includes many types of solid materials generated in the urbanization of human society and industrial applications. The most common solid waste stream is the Municipal Solid Waste (MSW) stream. The effective disposal of solid waste streams and mainly MSW has become a critical problem, as they are continually generated in ever expanding amounts around the globe and are predicted to increase even more with more and more countries moving into the developed world.

Conventional landfilling of MSW was the earliest method used to treat most of this type of waste and has been widely used for hundreds of years. However, this method has caused a lot of environmental problems and its use has been restricted during the global urbanization process. Among the factors that cause these restrictions are: the fermentation process of MSW caused by bacteria in landfills not only produces methane, which is a strong greenhouse gas, but also generates a large quantity of landfill leachate, which can contaminate urban groundwater.

In order to avoid these negative effects that landfills have on the environment and to avoid limitations of local geology and natural stability of the underground soil, thermal conversion technologies that leverage the conversion of MSW into reusable resources have been widely used. One more advantage of thermal conversion technologies is that they realize the efficient use of energy stored in the organic materials in MSW.

Among the thermal conversion technologies a common method used for years is incineration, which is always used for power generation or for heating systems. Moving grate systems are adapted to produce highpressure steam that can be used to generate electricity in a steam turbine. Up to 90% of the volume of incoming MSW can be reduced by incineration. However, economic analysis for the projects based on this technology suggests that it is favourable only when the feedstock has a high value of energy content. The presence of large volumes of moisture during humid periods of the year can reduce the economic returns significantly. Moreover, the main by-products of this process include fly ash, bottom ash, flue gases, and particulates. As is known, MSW incineration is the main source of dioxin pollution. It can be a challenge and prohibitively expensive to effectively remove all harmful contaminants from these by-products prior to discharging them into the surroundings.

Another main method of recovering energy from MSW is gasification, which is a high-temperature thermal decomposition process for converting solid feedstock into a fuel gas consisting primarily of hydrogen and carbon monoxide. Compared to incineration, gasification is a technology with higher energy efficiency and more environmental benefits in terms of emission of contaminants such as dioxins.

Generally, gasification is an endothermic process. The heat for gasification can come from any of the following: a) reaction heat from oxidization of a part of the feedstock, b) sensible heat from external sources such as hot char recirculation and non-carbonaceous material, e.g. calcined lime, and c) other energy sources such as plasma and microwave.

The application of partial combustion of incoming carbonaceous materials has been widely adopted in conventional gasification technologies. By means of feeding a considerable amount of air, a huge amount of N₂ is also fed into the reactor and the non-combustible gas CO₂, is produced. Since they are not removed, both the N₂ and the CO₂ lead to a diluted fuel gas with low caloric value (LCV).

Some advantages can be expected when thermal plasma is used as an energy source for the endothermic reactions in a gasifier. Firstly, thermal plasma provides extra energy and reduces the heat required for partial combustion. Secondly, the high temperature plasma flow can melt the inorganic components from the MSW. After the melted inorganic components cool down the contaminants can be locked in them thus avoiding the problems of fly and bottom ash that occur in MSW incineration systems.

These factors have been taken into account in the design of various different plasma based systems, which are described, for example, in US2010/0199557 A1, US7,452,392B2, US6,987,792B2, US7,832,344B2, and US8,199,790B2.

US 2011/062013 discloses a multi-zone carbon converter for converting processed feedstock into syngas and slag. The feedstock is converted to syngas and ash in a carbon conversion zone by heat energy supplied by heated air introduced into the carbon conversion zone via an air box. Ash is converted into molten slag in an inter-zonal region and/or a slag zone through the application of heat from a plasma heat source.

Prior systems and processes have not adequately addressed the utilization of the energy embedded within the waste and the use of the process to maximise the energetic output while minimizing the plasma yield.

It is an object of the present invention to provide a method and apparatus to convert the organic part in MSW into a clean fuel gas mainly consisting of hydrogen and carbon monoxide in a gasification unit.

It is a further object of the present invention to convert the solid residue of carbon and products from a gasifier shaft into fuel gas and to convert inorganic materials and ash into glass in a vitrification unit equipped several plasma torches.

Further purposes and advantages of this invention will appear as the description proceeds.

### Summary of the invention

The invention is a reactor for solid waste treatment and energy recovery from organic compounds in solid waste according to claim 1. The reactor comprises an updraft gasification shaft and a plasma melting chamber. The gasification shaft is constructed with an upper portion comprised of a cylindrical section and a lower portion comprised of a conical section whose interior wall slopes upwards and inwards relative to the vertical axis of the reactor until it smoothly joins the cylindrical section. The plasma melting chamber has an interior with a circular cross-section and comprises at least one plasma torch and a conical wedge having the shape of a truncate cone with its apex pointing upward located at its center.

In embodiments of the reactor of the invention the gasification shaft comprises, from top to bottom, the following zones that are defined by the activity that takes place in them as determined by the temperature distribution along the height of the shaft: a drying zone, a pyrolysis zone, a gasification zone, and an oxygenation zone.

The gasification shaft comprises a feeding pipe through which the feedstock is introduced into it. The feeding tube is relatively long compared to its internal diameter and extends directly vertically through the top of gasification shaft far into the drying zone.

The gasification shaft comprises an exhaust duct at its top through which raw syngas produced in the gasification shaft streams out of the reactor and the plasma melting chamber comprises a tapping system at its side adapted to allow periodic removal of metal and drainage of slag from a molten slag pool inside the plasma melting chamber.

Steam flows into the plasma melting chamber through nozzles in the mounting flange of the at least one plasma torch.

In embodiments of the reactor of the invention small amounts of at least one of oxygen, air, and carbon dioxide flow into the plasma melting chamber through nozzles in the mounting flange of the at least one plasma torch.

The reactor comprises a molten slag pool that flows around the plasma melting chamber in a circular path that is concentric with the vertical axis of the melting chamber.

In embodiments of the reactor of the invention feedstock is introduced into the gasification shaft after a simple mechanical sorting and shredding. The feedstock can comprise Municipal Solid Waste (MSW).

In a second aspect the invention is system for solid waste treatment and energy recovery from organic compounds in solid waste. The system comprises:
a. a reactor according to the first aspect of the invention;
b. a feedstock processing unit adapted to receive a heterogeneous variety of solid waste materials, to perform mechanical sorting in order to remove metals that can be recycled, to shred large pieces of feedstock into small sizes, and sort out the part of the feedstock that is not suitable to be fed into the gasification shaft; and
c. a raw syngas cleaning system adapted to remove tars and particulates contained in the raw syngas that streams out of the reactor through the exhaust duct at the top of the gasification shaft.

All the above and other characteristics and advantages of the invention will be further understood through the following illustrative and non-limitative description of embodiments thereof, with reference to the appended drawings.

### Brief Description of the Drawings

- Fig. 1 symbolically shows an embodiment of an MSW gasification system according to the invention; and
- Fig.2 symbolically shows an embodiment of the reactor 40 of the invention that is designed to convert MSW into syngas, slag and metals.

### Detailed description of the invention and preferred embodiments thereof

The present invention is an apparatus and method for solid waste treatment and energy recovery from organic compounds in solid waste. Depending on the nature of the input fuel and operation parameters, the syngas produced can be used as a fuel for electric power and for conversion to liquid hydrocarbons such as gasoline, methanol, ethanol, and other valuable chemicals. In one embodiment of the invention, a plurality of steam plasmas is injected in the melting chamber. The steam plasma contains sufficient energy to support the endothermic heat during organic decomposition and inorganic melting.

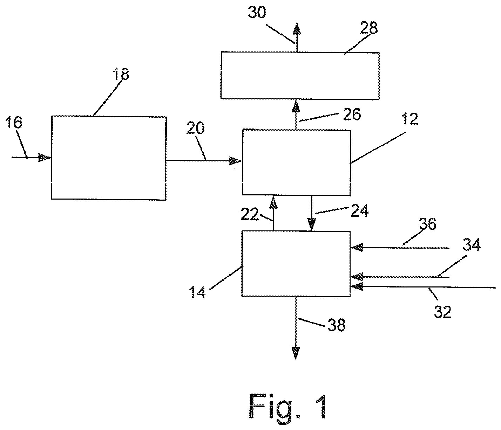

For the purpose of promoting an understanding of the principles of the invention, Fig.1 is a schematic diagram illustrating the apparatus of the present invention configured with an updraft gasification shaft 12 and a plasma melting chamber 14.

First, feedstock 16 containing a heterogeneous variety of municipal waste materials, mainly including paper-board, plastics, metals, textile, glass, and so on, is processed in a feedstock processing unit 18, which has two main functions. The first function is to perform mechanical sorting in order to remove metals that can be recycled. The second function is to shred large pieces of feedstock into small sizes and sort out the part of the feedstock, e.g. liquid waste, solid waste containing more than 50% moisture, and a waste stream having a majority of inorganic content, that is not suitable to be fed into the gasification shaft 12 .

After passing through feedstock processing unit 18, qualified feedstock 20 is sent to the gasification shaft 12. In this reactor, the waste will be preheated and dried at the top of the shaft and then, as it descends through the shaft, decompose and react with a gas stream 22 that rises from the plasma melting chamber 14. Solid residue 24, which moves out from the bottom part of gasification shaft 12 into plasma melting chamber 14, mainly consists of the inorganic materials and organic materials in the qualified feedstock 20 that are not converted into fuel gas completely in gasification shaft 12.

The volatile products that are produced from the degradation of the waste are mixed with the gas stream 22 and form a stream of raw syngas 26 at the outlet of the gasification shaft 12. These volatile products are the result of a series of reactions, including cracking, combustion and steam reforming, and other chemical reactions, which take place within the gasification shaft 12. The stream of raw syngas 26 is fed into raw syngas cleaning system 28 to remove tars and particulates contained in raw syngas. After cleaning the clean syngas 30 is rich of H₂ and CO, which are raw materials widely used in industry synthetic reactions to produce liquid chemicals.

In plasma melting chamber 14, a stream of steam 32 is used to cool down the plasma torch 34 and prevent potential damage to the plasma torch 34 that might be caused by high temperature. The steam 32, which is injected through the plasma torch 34 into the plasma melting chamber 14, also serves to convert unreacted carbon remaining in the exudate from gasification shaft 12 that falls into plasma melting chamber 14. Thus, the following gasification reaction occurs:

*C* + *H₂O* → *H*₂ + *CO*

A small amount of air 36 might also be injected through the plasma torch 34, in which case the following gasification reaction occurs:

*C* + *O*₂ → 2*CO*

If steam and a small amount of air are used to gasify carbonaceous material, hydrogen and carbon monoxide are the primary gaseous products exiting the melting chamber. The plasma melting chamber 14 contains molten slag 38 and/or metals. After being withdrawn from plasma melting chamber 14, the slag 38 becomes vitrified when cooled and may be sent to a landfill and/or recycled.

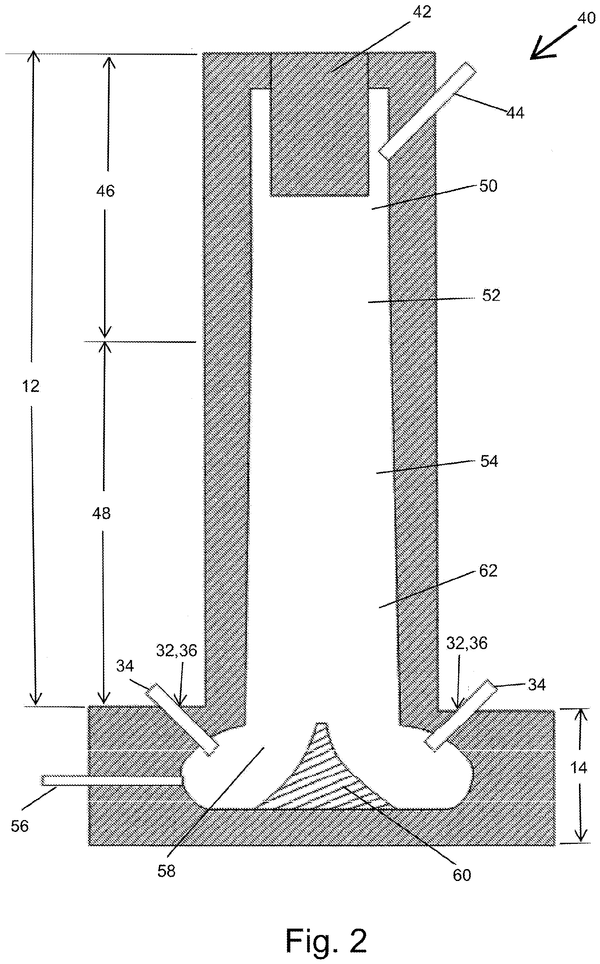

Fig.2 schematically illustrates an embodiment of the reactor 40 of the invention that is designed to convert MSW into syngas, slag and metals. The reactor 40 of Fig. 2, is shown in full elevation vertically sectioned. It comprises a plasma melting chamber 14 and a vertical gasification shaft 12 both of which are typically made of refractory-lined steel. The gasification shaft 12 comprises zones defined by the activity that takes place in them as determined by the temperature distribution along the shaft height. These zones include drying zone 50, pyrolysis zone 52, gasification zone 54, and oxygenation zone 62. Gasification shaft 12 includes a feeding pipe 42 through which the qualified feedstock 20 is introduced into reactor 40 and one exhaust duct 44 through which raw syngas 26 streams out of reactor 40. Feeding tube 42 extends directly vertically through the top of gasification shaft 12 into the drying zone 50 in order to lessen the chance of unreacted feed materials having small sizes being blown out through the exhaust ducts 44 together with raw syngas 26.

Gasification shaft 12 is constructed with an upper portion comprised of a cylindrical section 46 and a lower portion comprised of a conical section 48. The lower and upper ends of conical section 48 are joined smoothly with the melting chamber 14 and the cylindrical section 46 respectively. The interior wall in conical section 48 slopes upwards and inwards relative to the vertical axis of the reactor.

At least one plasma torch 34, which serves as the external energy source, is inserted through the walls of the plasma melting chamber 14 to create a high operating temperature of at least up to about 2000°C. The plasma torches 34 preheat steam and optionally air to a very high temperature to support the endothermic gasification and pyrolysis reactions in the gasification shaft 12.

To avoid the formation of harmful contaminants such as hydrofurans and dioxins, it is preferred to keep the space in melting chamber 14 as a reducing environment which does not favour their formation. Steam is used as the main oxidizer and added from the side of the melting chamber around the torch from the torch mounting flange but directly into the torch to convert the organic residues in the solid effluent from the gasification shaft 12. Some other oxidizers such as oxygen, air, and carbon dioxide, may be used in small amounts as supplementary oxiders. As the gasification process is mainly accomplished by using a steam and air mixture as driver gas, the syngas in the effluents from exhaust ducts 44 also has a relatively high calorific heat value. Thus, it is necessary to preheat the steam driver gas to a desired temperature to support the endothermic reactions occurring in the gasification shaft. This is done by injecting the driver gas agents through nozzles in the mounting flange which create a spiral movement of gas around the plasma torch due to the angle of the nozzles. The solid carbonaceous materials from gasification shaft 12 contain a small part of unreacted carbon. As the whole space in the melting chamber 14 is kept as a reducing environment, the unreacted carbon will absorb heat when it reacts with the oxidizers such as steam and air. Once the unreacted carbon is consumed completely, the temperature of the solid mainly ash left will increase significantly above the melting point that is around 1500 °C. It can be understood that the plasma melting chamber contains a carbonaceous bed in the upper level and a pool of melting slag in the lower level.

A tapping system 56 at the side of plasma melting chamber 14 is adapted to allow periodic removal of metal if so desired and drainage of slag from the molten slag pool 58. The position of the outlet of tapping system 56 is dependent on the amounts of slag that it is necessary to keep at the bottom of the melting chamber 14 to support the whole solid bed of MSW in the gasification shaft 12.

A unique feature of the invention is a conical wedge 60 located at the center of plasma melting chamber 14. Conical wedge 60 has the shape of a truncate cone with its apex pointing upward. It serves at least three basic functions:
1. To act as a grate that is used in prior art vertical shaft gasification systems to support the solid waste bed. This function is crucial for the stable operation of the whole system.
2. To distributes carbonized solid descending from the gasification shaft into the slag pool uniformly.
3. To make it possible to form a slag flow in a concentric circle.

Because of the conical shape of the lower part of gasification shaft, the transverse dimensions of the melting chamber are enlarged compared to the inner diameter of the gasification shaft. The enlarged diameter of the plasma melting chamber also increases the residence time of steam/air, which favours the conversion of unreacted carbon conversion in the melting chamber. It also makes it easier to preheat the steam/air to a very high temperature and allows the possibility of producing a large volume flow of steam/air.

Gravity, the circular interior wall of the plasma melting chamber 14, and the conical wedge 60 at its center keeps the molten slag pool 58 flowing in a circular path that is concentric with the vertical axis of the melting chamber. This circular flow of the molten slag keeps its temperature and consistency uniform preventing localized solidification within the molten slag pool 58 that could result in blockages that would require shutting down the apparatus.

The steam/air which is preheated to a very high temperature in the melting chamber flows upward through the descending solid feed in the gasification shaft 12, providing thermal and chemical driving forces for the gasification and pyrolysis reactions.

Compared with other solid waste such as biomass and coal, the quality of municipal solid waste can vary over a much wider range. The particle sizes also vary over a large range. Normally, in order to realize MSW gasification in a conventional gasification system, the combustible fraction in the municipal solid waste (known as RDF) is sorted by mechanical means and subsequently pelletized to provide feedstock with relatively stable physical and chemical characteristics, such as density, heating value, and particle size. Thus, the risk of bridging, i.e. blockage, in the waste bed in the vertical shaft that might be triggered by low density and irregular-shape particles can be reduced. However, the cost of MSW pre-treatment before entering the gasification reactor reduces the economic return.

The mechanism to trigger bridging is quite complicated; however, it mainly can be attributed to the following:
1. a high ratio of the depth to the diameter for the opening into the top of the gasification shaft;
2. fusing of ash at the oxidation zone;
3. irregular shape of the particles in the feedstock introduced into the top of the gasification shaft, such as chips having a long length,
4. swelling caused by plastic in pyrolysis zone; and
5. low density of the feedstock, which is the reason why, in the prior art, fine powders of biomass and coal are always pelletized before being fed into the gasification shaft.

As opposed to the prior art, in the system of the invention, the MSW feedstock can be introduced into gasification shaft 12 after a simple mechanical sorting and shredding. This is possible because of two design features of gasification shaft 12. Firstly, feeding pipe 42 is relatively long extending far into the drying zone 50. And secondly the shape of the conical section 48 at the lower part of the gasification shaft 12 is another key element to the MSW plasma gasification system of the invention.

The fresh feedstock fed through the feeding tube 42 into the drying zone 50 above the pyrolysis zone 52 has a relatively high density due to its high moisture content, which is sometimes up to 30% by weight moisture content. High density can reduce the risk of bridging and allow the solid residue move smoothly downward through the shaft. Several more advantages can be expected if a height of several feet of wet feedstock is kept in the feeding tube:
1. the chance of unreacted feed materials being blown out through the exhaust ducts is reduced;
2. the space above the drying zone is kept at a relatively low temperature, which allows part of heavy hydrocarbons in the ascending gas stream to condense and remain in the reactor, thereby lessening the burden on the raw syngas cleaning system;
3. heavy hydrocarbons, soot, and ash, generated in the pyrolysis zone are filtered out;
4. part of sensible heat from the raw syngas is recovered.

With the descending of the feedstock, the moisture content evaporates and the density of the feedstock also decreases. Also viscous liquids generated from MSW decomposition might contact the solids and chips with large length. Both of these processes can result in formation of bridges or agglomerates in a section of the gasification shaft having a narrow cross section. In the gradually increasing diameter starting from the top to the bottom of the conical section can reduce the risk of this kind of problem arising during operation of the system.

Although embodiments of the invention have been described by way of illustration, it will be understood that the invention may be carried out with many variations, modifications, and adaptations, without exceeding the scope of the claims.

## Claims

1. A reactor (40) for conversion of municipal solid waste into syngas, slag and metals, the reactor comprising:
(a) a gasification shaft (12) adapted such that feedstock (20) enters and is preheated and dried at the top part (50) of the gasification shaft (12) and then descends through the gasification shaft (12) where it is decomposed and reacts with a gas stream (22) rising from a plasma melting chamber (14) located at the bottom of the gasification shaft (12);
(b) a plasma melting chamber (14) comprising a circular interior wall and a conical wedge (60);
(c) at least one plasma torch (34) inserted through a wall of the plasma melting chamber (14); the plasma torch (34) adapted to preheat steam to a very high temperature to support endothermic gasification and pyrolysis reactions in the gasification shaft (12);
(d) a feeding pipe (42) that extends directly vertically through the top of gasification shaft (12);
(e) an exhaust duct (44) located near the top of gasification shaft (12) through which raw syngas produced in the gasification shaft (12) streams out of the reactor (40);
(f) a tapping system (56) located at the side of the plasma melting chamber (14), the tapping system (56) adapted to allow periodic removal of metal and drainage of slag from a molten slag pool (58) in the plasma melting chamber (14);
**characterized in that**:
i) the mounting flange of the at least one plasma torch (34) is adapted to allow steam used as an oxidizer to be added from the side of the melting chamber (14) and to flow directly into the at least one plasma torch (34);
ii) the mounting flange of the at least one plasma torch (34) comprises nozzles through which steam used as a driver gas is injected to create a spiral movement of gas around the at least one plasma torch (34) due to the angle of the nozzles;
iii) the plasma melting chamber (14) has an enlarged transverse dimension compared to the inner diameter of the gasification shaft (12);
iv) the conical wedge (60) is located in the plasma melting chamber (14) in such a way that it makes possible the formation and maintenance of a flow of a molten slag pool (58) in a circular path that is concentric with the vertical axis of the plasma melting chamber (14);
v) the feeding pipe (42) is relatively long compared to its internal diameter and extends directly vertically through the top of gasification shaft (12); and
vi) the at least one plasma torch (34) is the external energy source to the reactor (40), which provides thermal and chemical driving forces for gasification and pyrolysis reactions.

2. The reactor of claim 1, wherein the mounting flange of the at least one plasma torch (34) is adapted to allow small amounts of at least one of oxygen, air, and carbon dioxide to be added from the side of the plasma melting chamber (14) directly into at least one plasma torch (34).

3. A system for solid waste treatment and energy recovery from organic compounds in solid waste, the system comprising:
a. a reactor (40) according to any one of claims 1 or 2;
b. a feedstock processing unit (18) adapted to receive a heterogeneous variety of solid waste materials, to perform mechanical sorting in order to remove metals that can be recycled, to shred large pieces of feedstock into small sizes, and sort out the part of the feedstock that is not suitable to be fed into a gasification shaft (12) of reactor (40); and
c. a raw syngas cleaning system (28) adapted to remove tars and particulates contained in the raw syngas (26) that streams out of the reactor (40) through an exhaust duct (44) at the top of the gasification shaft (12).

4. The system of claim 3, wherein feedstock is introduced into the gasification shaft (12) of reactor (40) after a simple mechanical sorting and shredding in the feedstock processing unit (18).

5. The system of claim 3, wherein the feedstock received by the feedstock processing unit (18) comprises Municipal Solid Waste (MSW).

## Patentansprüche

1. Reaktor (40) zur Umwandlung von festen Siedlungsabfällen in Synthesegas, Schlacke und Metalle, wobei der Reaktor Folgendes umfasst:
(a) einen Vergasungsschacht (12), der derart ausgelegt ist, dass Ausgangsmaterial (20) an dem oberen Teil (50) des Vergasungsschachtes (12) eintritt und vorgewärmt und getrocknet wird und dann durch den Vergasungsschacht (12) nach unten steigt, wo es zersetzt wird und mit einem Gasstrom (22) reagiert, der von einer Plasmaschmelzkammer (14) aufsteigt, die sich am Boden des Vergasungsschachtes (12) befindet;
(b) eine Plasmaschmelzkammer (14), die eine kreisförmige Innenwand und einen konischen Keil (60) umfasst;
(c) zumindest einen Plasmabrenner (34), der durch eine Wand der Plasmaschmelzkammer (14) eingeführt wird; wobei der Plasmabrenner (34) ausgelegt ist, um Dampf auf eine sehr hohe Temperatur vorzuwärmen, um endotherme Vergasungs- und Pyrolysereaktionen in dem Vergasungsschacht (12) zu unterstützen;
(d) ein Zuführrohr (42), das sich direkt vertikal durch die Oberseite des Vergasungsschachtes (12) erstreckt;
(e) einen Abgaskanal (44), der sich nahe der Oberseite des Vergasungsschachtes (12) befindet, durch den in dem Vergasungsschacht (12) erzeugtes Rohsynthesegas aus dem Reaktor (40) strömt;
(f) ein Zapfsystem (56), das sich an der Seite der Plasmaschmelzkammer (14) befindet, wobei das Zapfsystem (56) ausgelegt ist, um periodische Entfernung von Metall und Drainage von Schlacke aus einem Schmelzschlackenbecken (58) in der Plasmaschmelzkammer (14) zu ermöglichen;
**dadurch gekennzeichnet, dass**:
i) der Montageflansch des zumindest einen Plasmabrenners (34) ausgelegt ist, um zu ermöglichen, dass Dampf, der als ein Oxidationsmittel verwendet wird, von der Seite der Schmelzkammer (14) hinzugefügt wird und direkt in den zumindest einen Plasmabrenner (34) strömt;
ii) der Montageflansch des zumindest einen Plasmabrenners (34) Düsen umfasst, durch die Dampf, der als ein Treibgas verwendet wird, eingespritzt wird, um aufgrund des Winkels der Düsen eine Spiralbewegung von Gas um den zumindest einen Plasmabrenner (34) zu erzeugen;
iii) die Plasmaschmelzkammer (14) eine vergrößerte Querabmessung verglichen mit dem Innendurchmesser des Vergasungsschachtes (12) aufweist;
iv) sich der konische Keil (60) derart in der Plasmaschmelzkammer (14) befindet, dass er die Bildung und Aufrechterhaltung einer Strömung eines Schmelzschlackenbeckens (58) in einer kreisförmigen Strecke ermöglicht, die konzentrisch mit der vertikalen Achse der Plasmaschmelzkammer (14) ist;
v) das Zuführrohr (42) verglichen mit seinem Innendurchmesser relativ lang ist und sich direkt vertikal durch die Oberseite des Vergasungsschachtes (12) erstreckt; und
vi) der zumindest eine Plasmabrenner (34) die externe Energiequelle für den Reaktor (40) ist, die thermische und chemische Antriebskräfte für Vergasungs- und Pyrolysereaktionen bereitstellt.

2. Reaktor nach Anspruch 1, wobei der Montageflansch des zumindest einen Plasmabrenners (34) ausgelegt ist, um zu ermöglichen, dass kleine Mengen von zumindest einem von Sauerstoff, Luft und Kohlendioxid von der Seite der Schmelzkammer (14) direkt in den zumindest einen Plasmabrenner (34) hinzugefügt werden.

3. System zur Behandlung von festen Abfällen und Energiegewinnung aus organischen Verbindungen in festen Abfällen, wobei das System Folgendes umfasst:
a. einen Reaktor (40) nach einem der Ansprüche 1 oder 2;
b. eine Ausgangsmaterialverarbeitungseinheit (18), die ausgelegt ist, um eine heterogene Vielfalt aus festen Abfallmaterialien aufzunehmen, um mechanische Sortierung durchzuführen, um Metalle zu entfernen, die recycelt werden können, um große Teile an Ausgangsmaterial in kleine Teile zu zerteilen und um den Teil des Ausgangsmaterials auszusortieren, der nicht dazu geeignet ist, einem Vergasungsschacht (12) des Reaktors (40) zugeführt zu werden; und
c. ein Rohsynthesegasreinigungssystem (28), das dazu ausgelegt ist, Teere und Partikel zu entfernen, die in dem Rohsynthesegas (26) enthalten sind, das durch einen Abgaskanal (44) an der Oberseite des Vergasungsschachtes (12) aus dem Reaktor (40) strömt.

4. System nach Anspruch 3, wobei Ausgangsmaterial nach einem einfachen mechanischen Sortieren und Zerteilen in der Ausgangsmaterialverarbeitungseinheit (18) in den Vergasungsschacht (12) des Reaktors (40) eingeführt wird.

5. System nach Anspruch 3, wobei das durch die Ausgangsmaterialverarbeitungseinheit (18) aufgenommene Ausgangsmaterial feste Siedlungsabfälle (MSW) umfasst.

## Revendications

1. Réacteur (40) destiné à la conversion de déchets solides municipaux en gaz de synthèse, scories et métaux, le réacteur comprenant :
(a) une cuve de gazéification (12) adaptée de sorte que la matière première (20) pénètre et soit chauffée et séchée au niveau de la partie supérieure (50) de la cuve de gazéification (12), et descende ensuite à travers la cuve de gazéification (12) où elle se décompose et réagit avec un flux de gaz (22) s'élevant d'une chambre à fusion de plasma (14) au niveau de la partie inférieure de la cuve de gazéification (12) ;
(b) une chambre de fusion à plasma (14) comprenant une paroi intérieure circulaire et un coin conique (60) ;
(c) au moins une torche à plasma (34) insérée à travers une paroi de la chambre de fusion à plasma (14) ; la torche à plasma (34) étant adaptée pour préchauffer la vapeur à une température très élevée afin de supporter les réactions de gazéification et de pyrolyse endothermiques dans la cuve de gazéification (12) ;
(d) un tuyau d'alimentation (42) qui s'étend directement de manière verticale à travers la partie supérieure de la cuve de gazéification (12) ;
e) un conduit d'échappement (44) situé près du la partie supérieure de la cuve de gazéification (12) à travers lequel le gaz de synthèse brut produit dans la cuve de gazéification (12) s'écoule hors du réacteur (40) ;
(f) un système de soutirage (56) situé sur le côté de la chambre de fusion à plasma (14), le système de soutirage (56) étant adapté pour permettre un retrait du métal et un drainage du scorie périodiques d'un bassin de scorie en fusion (58) dans la chambre de fusion à plasma (14) ;
**caractérisé en ce que**:
i) la bride de montage de la au moins une torche à plasma (34) est adaptée pour permettre à la vapeur utilisée en tant qu'oxydant d'être ajoutée à partir du côté de la chambre de fusion (14) et de s'écouler directement dans la au moins une torche à plasma (34) ;
ii) la bride de montage de la au moins une torche à plasma (34) comprenant des buses à travers lesquelles de la vapeur utilisée en tant que gaz d'entraînement est injectée pour créer un mouvement de gaz en spirale autour de la au moins une torche à plasma (34) grâce à l'angle des buses ;
iii) la chambre de fusion à plasma (14) possède une dimension transversale élargie par rapport au diamètre interne de la cuve de gazéification (12) ;
iv) le coin conique (60) est situé dans la chambre de fusion à plasma (14) d'une façon telle que la formation et le maintien de l'écoulement d'un bain de scories en fusion (58) est rendu possible selon un trajet circulaire qui est concentrique par rapport à l'axe vertical de la chambre de fusion de plasma (14) ;
v) le tuyau d'alimentation (42) est relativement long par rapport à son diamètre interne et s'étend directement de manière verticale à travers la partie supérieure de la cuve de gazéification (12) ; et
vi) la au moins une torche à plasma (34) est la source d'énergie externe au réacteur (40), qui fournit des forces d'entraînement thermiques et chimiques pour des réactions de gazéification et de pyrolyse.

2. Réacteur selon la revendication 1, ladite bride de montage de la au moins une torche à plasma (34) étant adaptée pour permettre l'ajout de petites quantités d'au moins l'un de l'oxygène, de l'air et du dioxyde de carbone à partir du côté de la chambre de fusion à plasma (14) directement dans au moins une torche à plasma (34).

3. Système destiné au traitement de déchets solides et à la récupération d'énergie à partir de composés organiques contenus dans des déchets solides, ledit système comprenant :
a. un réacteur (40) selon l'une quelconque des revendications 1 ou 2 ;
b. une unité de traitement de matière première (18) adaptée pour recevoir une variété hétérogène de matériaux de déchets solides, pour effectuer un tri mécanique afin d'éliminer les métaux pouvant être recyclés, de déchiqueter de grandes pièces de matière première en des pièces de petites tailles et de trier la partie de la matière première qui ne convient pas d'introduire dans une cuve de gazéification (12) du réacteur (40) ; et
c. un système de nettoyage de gaz de synthèse brut (28) adapté pour éliminer les goudrons et les particules contenus dans le gaz de synthèse brut (26) qui s'écoule hors du réacteur (40) par un conduit d'échappement (44) au niveau de la partie supérieure de la cuve de gazéification (12).

4. Système selon la revendication 3, ladite matière première étant introduite dans la cuve de gazéification (12) du réacteur (40) après un simple tri mécanique et un déchiquetage dans l'unité de traitement de matière première (18).

5. Système selon la revendication 3, ladite matière première reçue par l'unité de traitement de matière première (18) comprenant des déchets solides municipaux (MSW).
